## Europäisches Patentamt
## European Patent Office
## Office européen des brevets

(19)

(11) Veröffentlichungsnummer: **0 190 707**
**B1**

(12) **EUROPÄISCHE PATENTSCHRIFT**

(45) Veröffentlichungstag der Patentschrift: **09.01.91**

(51) Int. Cl.⁵: **B 29 B 7/76**

(21) Anmeldenummer: **86101379.5**

(22) Anmeldetag: **03.02.86**

(54) Verfahren und Vorrichtung zur Hochdruckvermischung von Mehrkomponentenkunststoff, insbesondere Polyurethan.

(30) Priorität: **07.02.85 DE 3504147**

(43) Veröffentlichungstag der Anmeldung:
**13.08.86 Patentblatt 86/33**

(45) Bekanntmachung des Hinweises auf die Patenterteilung:
**09.01.91 Patentblatt 91/02**

(84) Benannte Vertragsstaaten:
**CH DE FR GB IT LI NL**

(56) Entgegenhaltungen:
EP-A-0 009 118
EP-A-0 070 486

KUNSTSTOFFE, Band 71, Nr. 10, Oktober 1981, Seiten 775-780, München, DE; D. SCHLOTTERBECK: "Polyurethan-Verarbeitung nach dem Reaktionsschaumgiess-Verfahren (RSG-Verfahren)"

(73) Patentinhaber: **ELASTOGRAN POLYURETHANE GMBH**
**Landwehrweg**
**D-2844 Lemförde (DE)**

(72) Erfinder: **Wallner, Josef**
**Brauneckstrasse 2**
**D-8150 Holzkirchen (DE)**
Erfinder: **Schlüter, Klaus**
**Windeckstrasse 1c**
**D-8000 München 70 (DE)**
Erfinder: **Taubenmann, Peter**
**Strindbergstrasse 1**
**D-8000 München 60 (DE)**
Erfinder: **Zettler, Hans Dieter**
**Bückelhaube 23**
**D-6718 Grünstadt (DE)**
Erfinder: **Thiele, Heino, Dr.**
**An der Froschlache 23**
**D-6700 Ludwigshafen (DE)**
Erfinder: **Barthelmes, Rudolf**
**Dirmsteiner Weg 33**
**D-6700 Ludwigshafen 29 (DE)**

(74) Vertreter: **Springer, Hans Jörg, Dr. et al**
**BASF Aktiengesellschaft Patentabteilung Carl-Bosch-Strasse 38**
**D-6700 Ludwigshafen (DE)**

EP 0 190 707 B1

**Beschreibung**

Die Erfindung betrifft ein Verfahren nach dem Oberbegriff des Anspruches 1 sowie eine Vorrichtung zur Durchführung des Verfahrens.

Es sind verschiedene Verfahren zum Vermischen von Mehrkomponentenkunststoffen bekannt. Die sog. Niederdruckverfahren arbeiten mit einem mechanischen Rührer, der die Komponenten in der Mischkammer vermischt. Die hierdurch erreichten Mischergebnisse sind für viele Anwendungsfälle gut. Ein Problem bereitet aber die Reinigung der Mischkammer, da die hochreaktiven Komponenten in der Mischkammer zum Teil ausreagieren und sich dort mit der Zeit ansammeln. Aus diesem Grunde werden Mischkammer und Rührer durch ein Spülmittel gereinigt. Dies stellt einen erheblichen Aufwand und eine häufig nicht zulässige Belastung der Umwelt dar. Darüber hinaus kann die Verwendung eines Spülmittels nicht verhindern, daß sich in der Mischkammer und an dem Rührer Komponentenreste ansammeln. In jedem Falle muß die Mischkammer dann auseinandergebaut und mechanisch gereinigt werden. Dies gilt insbesondere für den relativ kompliziert gestalteten Rührer. Deshalb wurden die sog. Hochdruckmischvorrichtungen entwickelt, die auf den Einsatz eines mechanischen Rührers verzichten. In diesen Vorrichtungen werden die Komponenten mit hohem Druck durch einander gegenüberliegende Düsen in eine Mischkammer eingespritzt. Die Einspritzdüsen wandeln den hohen Druck in Geschwindigkeit um, die hierdurch entstehende kinetische Energie bewirkt die Mischung. Da ein mechanischer Rührer fehlt, kann die Mischkammer durch einen Kolben nach jedem Mischvorgang oder "Schuß" mechanisch gereinigt werden. In den meisten Anwendungsfällen liegt der Komponentendruck vor den Einspritzdüsen bei 150 bis 200 bar. Aus der Zeitschrift: Kunststoffe 71 (1981) 10, S. 775—780 ist eine gattungsgemäße Hochdruck-Schaumvorrichtung, bestehend aus einem Vorratsbehälter, einer Mischkammer mit Einspritzdusen und neutralem Kolben sowie einer Hochdruckpumpe für Drücke bis 300 bar bekannt. Die Mischintensität, die praktisch für die Güte des erzeugten Produktes wesentlich ist, ist bei diesen Drücken für die meisten Anwendungsfälle zufriedenstellend. In der theoretischen Diskussion ist es schon erörtert worden, die Drücke weiter zu erhöhen, um die Mischintensität auch für schwer zu mischende Komponenten zu verbessern. Nach Auffassung der Fachwelt war dieses mit den bekannten Vorrichtungen nicht möglich. Aus diesem Grunde ist die Fachwelt einen anderen Weg gegangen. Im Anschluß an die Gegenstromvermischung mit Drücken bis zu 250 bar wurden in der Mischkammer Drosselorgane oder andere Schikanen vorgesehen, um turbulente Strömungsverhältnisse der Komponentenmischung zu erzeugen und so die Mischintensität zu verbessern. In der Praxis wurden in die Mischkammer während des Mischvorganges seitlich Stifte eingeschoben, die den Querschnitt der Mischkammer verringerten und das Komponentengemisch auf dem Wege zur Austrittsöffnung auf verschlungenen Bahnen zwangen und so durch Verwirbelung für eine Verbesserung der Mischung sorgen. Die Stife müssen zum Reinigen zurückgezogen werden, damit sie die Bewegung des Reinigungskolbens in Richtung auf die Austrittsöffnung nicht behindern. Diese Vorrichtung ist durch die zusätzlichen Hydraulikorgane und deren Steuerung verhältnismäßig aufwendig. Die Mischintensität wurde verbessert, aber in einigen Anwendungsfällen, insbesondere auch bei kleinen Durchflußmengen pro Zeiteinheit, ist sie jedoch nicht immer zufriedenstellend. Der Komponentendruck wird bei diesen bekannten Vorrichtungen durch eine Pumpe erzeugt, bei der es sich beispielsweise um eine motorisch angetriebene Axialkolbenpumpe handelt, die unmittelbar auf die Komponenten einwirkt und so den Komponentendruck erzeugt. Es wurden auch schon einhubige Kolbenpumpen eingesetzt und zwar insbesondere dann, wenn Komponenten mit schwer zu fördernden oder abrasiven Zusätzen eingesetzt wurden.

Der Erfindung liegt nun die Aufgabe zugrunde, ein Verfahren nach dem Oberbegriff des Anspruchs 1 und eine entsprechende Vorrichtung zu schaffen, die die Mischintensität verbessert, ohne daß zusätzliche Schikanen in der Mischkammer erforderlich sind, d.h. die Mischvorrichtung soll einfach aufgebaut sein.

Diese Aufgabe wird durch die Merkmale der Ansprüche 1 und 4 gelöst.

In überraschender Weise hat sich herausgestellt, daß es bei richtiger Dimensionierung der unter hohem Druck stehenden Bauteile und bei richtiger Festlung der Geometrie und richtiger Auswahl der Werkstoffe für die Einspritzdüsen möglich ist, den Komponentendruck erheblich, nämlich auf die genannten Werte, zu erhöhen. Praktische Versuche haben gezeigt, daß die Mischintensität wesentlich verbessert wird, ohne daß eine weitere mechanische Einwirkung auf die Mischung nach dem Einspritzen der Komponenten in die Mischkammer erforderlich ist. Die Mischung findet praktisch allein durch die Gegenstrominjektion statt.

In vorteilhafter Weise wird der hohe Komponentendruck durch zwei hintereinander geschaltete Pumpen erzeugt. Die erste Pumpe ist eine motorisch angetriebene Hydraulikpumpe, beispielsweise eine Drehkolbenpumpe, die einen üblichen Hydraulikdruck von beispielsweise 250 bar erzeugt, der dann die zweite Pumpe, eine einhubige Kolbenpumpe, antreibt. Diese Kolbenpumpe ist als Druckübersetzer ausgebildet. Wenn ein Druck von beispielsweise 1000 bar erzeugt werden soll, so liegt das Überrsetzungsverhältnis der Kolbenpumpe im Bereich von 4:1. Erst die Kolbenpumpe wirkt auf die zu mischenden Komponenten. Wenn der Druck der ersten Pumpe, der Hydraulikpumpe, entsprechend erhöht wird, beispielsweise auf 350 bar und ein Komponentendruck von 700 bar erwünscht wird, genügt ein Übersetzungsverhältnis von 2:1.

Es ist möglich, die zweite Pumpe, die einhubige Kolbenpumpe, so zu steuern, daß unmittelbar vor Beginn eines Schusses der Kolben verhältnismäßig schnell bewegt wird, so daß der erwünschte Komponentendruck entsprechend schnell bereitgestellt wird. Wenn die Einspritzdüsen dann geöffnet werden, wird der Kolben entsprechend langsamer und zwar in Abhängigkeit von den Komponentenverhältnissen (Viskosität usw.) bewegt.

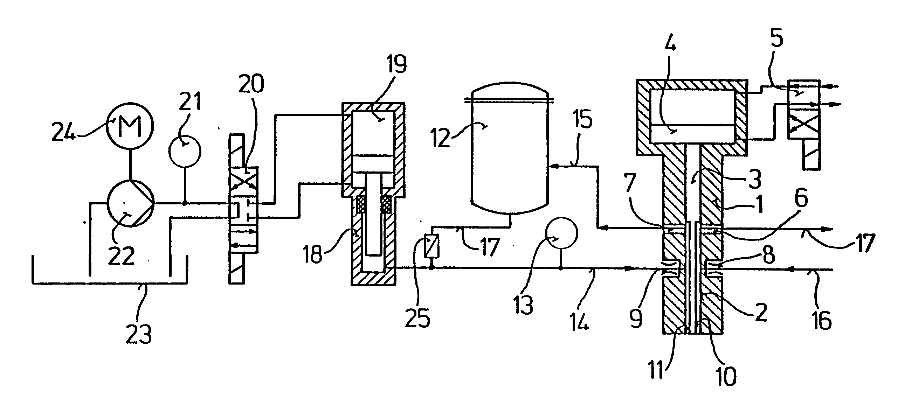

Im folgenden wird die Erfindung unter Hinweis auf die Zeichnung anhand eines Ausführungsbeispiels näher erläutert.

In der einzigen Figur ist eine Vorrichtung zur Durchführung des erfindungsgemäßen Verfahrens schematisch dargestellt und zwar nur die eine "Komponentenseite", da die andere Seite entsprechend identisch ausgebildet ist.

In der Zeichnung ist eine Mischvorrichtung 1 mit einer Mischkammer 2 dargestellt, in der ein Reinigungs- und Steuerkolben 3 hin- und herbewegbar ist. Dieser Kolben wird mit Hilfe seines hydraulischen Teils 4 bewegt. Die Steuerung erfolgt über ein Ventil 5. In die Mischkammer führen Eintrittsdüsen 8 und 9 für die Komponenten. In dem Kolben sind Rücklaufnuten 10 und 11 vorgesehen, die in der Nichtmisch- oder Schließstellung die Verbindung mit Rücklauföffnungen 6 und 7 herstellen. Zu den Eintrittsdüsen 8 und 9 führen Vorlaufleitungen 14 und 16. Von den Rücklauföffnungen 6 und 7 gehen Rücklaufleitungen 15 und 17 aus. Der Lagertank für die eine Komponente ist mit 12 bezeichnet. Eine derartige Vorrichtung ist bekannt.

Die Komponenten werden zu der jeweiligen Einspritzdüse 8 oder 9 mit Hilfe einer einhubigen Kolbenpumpe 18 gefördert, deren hydraulischer Teil mit 19 bezeichnet ist. Der hydraulische Kolben weist einen sehr viel größeren Querschnitt als der die Komponente beaufschlagende Kolben. Diese einhubige Kolbenpumpe wirkt somit als Druckübersetzer. Der hydraulische Teil 19 wird durch eine Axialkolbenpumpe 22 mit einem Motor 24 betätigt. Der Hydrauliktank ist mit 23 bezeichnet. Ein Ventil 20 nimmt die Richtungssteuerung für den Druckübersetzer, d.h. für die einhubige Kolbenpumpe 18 vor. An dem Manometer 21 wird der Druck angezeigt, der beispielsweise bei 250 bar liegt. Bei entsprechender Auswahl und Einstellung der einhubigen Kolbenpumpe 18 zeigt das Manometer 13 dann einen Druck von ca. 1000 bar an. Durch die Komponentenleitung 17 und das Rückschlagventil 25 wird zunächst in den Komponententeil 18 des Druckübersetzers angesaugt.

Im Betrieb stellt die Axialkolbenpumpe 22 den notwendigen hydraulischen Druck in der ersten Druckstufe zur Verfügung. Bei Umschaltung des Ventils 20 wird die einhubige Kolbenpumpe 18 in Bewegung gesetzt. Vor Beginn eines Schusses, d. h. bevor der Reinigungs- und Steuerkolben 3 die Eintrittsdüsen 8 und 9 freigegeben hat, kann diese Bewegung entsprechend schnell erfolgen, damit die Vorrichtung möglichst schnell schußbereit ist. Bedingt durch die Dimensionierung der beiden Kolben in dem Hydraulikteil 19 einerseits und in dem Komponententeil 18 andererseits, wird der durch die Axialkolbenpumpe 22 erzeugte Druck entsprechend erhöht. Dieses kann an dem Manometer 13 abgelesen werden. Mit diesem hohen Druck treten die Komponenten dann bei zurückgezogenem Reinigungs- und Steuerkolben 3 in die Mischkammer 2 ein. Hier erfolgt die Mischung in der beschriebenen Weise mit sog. "Höchstdruck".

## Patentansprüche

1. Verfahren zur Hochdruckvermischung von Mehrkomponentenkunststoffen, insbesondere Polyurethan, durch Gegenstrominjektion, wobei die Komponenten durch Einspritzdüsen, die den Komponentendruck im wesentlichen in Geschwindigkeit umwandeln, in einen Mischraum eingespritzt werden, dadurch gekennzeichnet, daß der Komponentendruck vor den Einspritzdüsen auf über 400 bar eingestellt wird.

2. Verfahren nach Anspruch 1, dadurch gekennzeichnet, daß der Komponentendruck auf 500 bis 1000 bar eingestellt wird.

3. Verfahren nach Anspruch 1 oder 2, dadurch gekennzeichnet, daß der Komponentendruck für jede Komponente zweistufig durch zwei hintereinandergeschaltete Pumpen erzeugt wird.

4. Vorrichtung zur Durchführung des Verfahrens nach Anspruch 1 bis 3, bestehend aus einem Vorratsbehälter (12), eine Mischkammer (2) mit Einspritzdüsen (8, 9) und einem zentralen Kolben (3) sowie mindestens einer Hochdruckpumpe, dadurch gekennzeichnet, daß die erste Pumpe eine motorisch angetriebene Kolbenpumpe (22) ist, die auf eine zweite, einen Druckübersetzer bildende, einhubige Kolbenpumpe (18) wirkt, die den Hydraulikdruck der ersten Pumpe auf den gewünschten Komponentendruck erhöht.

5. Vorrichtung nach Anspruch 4, dadurch gekennzeichnet, daß die den Druckübersetzer bildende Kolbenpumpe (18) mit einem übersetzungsverhältnis im Bereich von 4:1 arbeitet.

6. Vorrichtung nach Anspruch 4 oder 5, dadurch gekennzeichnet, daß der Kolben der einhubigen Kolbenpumpe (18) zu Beginn seines Hubes vor der Mischung (vor dem Schuß) schneller vorgeschoben wird als während der Mischung.

## Revendications

1. Procédé pour le mélange haute pression de matières plastiques multicomposantes, en particulier de polyuréthane, par injection à contre-courant, les composantes étant injectées dans une chambre de mélange par des buses d'injection qui transforment la pression des composantes essentiellement en vitesse, caractérisé par le fait que la pression des composantes est réglée en amont des buses d'injection, à plus de 400 bar.

2. Procédé selon la revendication 1, caractérisé par le fait que la pression des composantes est réglée à 500 jusqu'à 1000 bar.

3. Procédé selon la revendication 1 ou 2, caractérisé par le fait que la pression des composantes est produite, pour chaque composante, en deux étapes, par deux pompes montées l'une derrière l'autre.

4. Dispositif pour la mise en oeuvre du procédé selon l'une des revendications 1 à 3, constitué d'un réservoir d'alimentation (12), d'une chambre de mélange (2) munie de buses d'injection (8, 9) et d'un piston central et d'au moins une pompe haute pression, caractérisé par le fait que la première pompe et une pompe à piston (22), entraînée par moteur, qui agit sur une deuxième pompe (18), à simple course, formant multiplicateur de pression, qui élève la pression hydraulique de la première pompe à la pression de composante voulue.

5. Dispositif selon la revendication 4, caractérisée par le fait que la pompe à piston (18) formant multiplicateur de pression travaille à un rapport de multiplication voisin de 4/1.

6. Dispositif selon la revendication 4 ou 5, caractérisé par le fait que le piston de la pompe à simple course (18) est propulsé au début de sa course, avant le mélange (avant l'injection), plus rapidement que pendant le mélange.

**Claims**

1. A process for mixing a multi-component plastic, in particular polyurethane, under high pressure by countercurrent injection, the components being injected into a mixing space through injection nozzles which convert the component pressure substantially into velocity, wherein the component pressure is brought to more than 400 bar upstream of the injection nozzles.

2. A process as claimed in claim 1, wherein the component pressure is brought to 500—1000 bar.

3. A process as claimed in claim 1 or 2, wherein the component pressure for each component is generated in two stages by means of two pumps connected in series.

4. Apparatus for carrying out the process as claimed in any of claims 1 to 3, wherein the first pump is a motor-driven reciprocating pump comprising a storage tank (12), a mixing chamber (2) having injection nozzles (8, 9), and a central piston (3) and also at least one high-pressure pump (22) which acts on a second single-stroke reciprocating pump (18) which constitutes a pressure intensifier and increases the hydraulic pressure of the first pump to the desired component pressure.

5. Apparatus as claimed in claim 4, wherein the reciprocating pump (18) which constitutes the pressure intensifier operates at an intensification ratio of 4:1.

6. Apparatus as claimed in claim 4 or 5, wherein the piston of the single-stroke reciprocating pump (18) is moved forward more rapidly at the beginning of its stroke, prior to mixing (prior to the shot), than during mixing.